# EUROPEAN PATENT SPECIFICATION

(11) **EP 2 917 987 B1**
(45) Date of publication and mention of the grant of the patent: **30.05.2018**
(21) Application number: 13853920.0
(22) Date of filing: 12.11.2013
(51) Int. Cl.: H02H 3/20, H02H 9/00, G06F 1/16

(54) **SYSTEM AND METHOD FOR I-SAFE MOBILE DEVICES**
SYSTEM UND VERFAHREN FÜR I-SICHERE MOBILE VORRICHTUNGEN
SYSTÈME ET PROCÉDÉ POUR DISPOSITIFS MOBILES À SÉCURITÉ INTRINSÈQUE

(30) Priority: 09.11.2012 US 201261724696 P; 15.03.2013 US 201361792222 P
(43) Date of publication of application: 16.09.2015
(73) Proprietor: Aegex Technologies, LLC, Atlanta GA 30305 (US)
(72) Inventor: TROXELL, Brian, Atlanta, GA 30309-2492 (US); WIGHTMAN, James, Clinton, Ronkonkoma, NY 11779 (US); CASSARA, Ralph, Ronkonkoma, NY 11779 (US); ONG, Julian, Eng, Ronkonkoma, NY 11779 (US); WILD, Robert, W., Ronkonkoma, NY 11779 (US); SWIFT, Doreen, Keenan, Ronkonkoma, NY 11779 (US); ALEXANDER, Matthew, Ronkonkoma, NY 11779 (US)
(74) Representative: Mears, Andrew David
(86) International application number: PCT/US2013/069767
(87) International publication number: WO 2014/075111

(56) References cited:
- WO-A1-2012/084394
- WO-A2-2008/036252
- GB-A- 2 463 091
- US-A- 5 301 082
- US-A- 5 977 860
- US-A1- 2003 137 193
- US-A1- 2004 064 631
- US-B1- 6 184 658

## Description

### FIELD OF THE INVENTION

The present invention relates to use of the mobile device in a potentially explosive atmosphere, and more particularly, relates to a method and system for intrinsically safe mobile devices.

### BACKGROUND OF THE INVENTION

The design, certification, manufacture and use of a communications device in a potentially explosive atmosphere can create an array of challenges. Modern communications equipment, such as smartphones, require significant power and stored capacitance to operate the vast array of power hungry components such as 3G communications, Wi-Fi, GPS, camera, touch screen and the operating system itself. The power to operate all of these features in a small, lightweight and confined handheld form factor further complicates the design of such mobile devices.

Intrinsic safety relies on the electrical apparatus being designed so that it is unable to release sufficient energy, by either thermal or electrical means, to cause an ignition of a flammable substance. The energies required to ignite various explosive groups have been proven by experimentation. Data has been produced, and can be used to indicate safe levels of energy for the various categories that may be encountered.

Therefore, a need exists for a method and apparatus that provides use of the mobile device in a potentially explosive atmosphere. Further limitations and disadvantages of conventional systems will become apparent to one of skill in the art after reviewing the remainder of the present application with reference to the drawings and detailed description which follows.

### Closest prior art

WO2008/036252 describes an intrinsically safe battery powered device that includes a housing, a battery receiving region, an intrinsically safe power supply, and device electrical circuitry. The power supply uses energy from batteries received in the battery receiving region of the device to power the circuitry. In one implementation, the power supply includes an intrinsically safe charge pump circuit.

US6184658 proposes a battery pack incorporating a lithium ion battery. The battery pack has: a circuit board of the type that parts are mounted on one surface thereof, on the part-mounting surface of which a plurality of circuit parts forming a protective circuit for preventing the over-charge and over-discharge of the battery; and resin which seals the whole part-mounting surface of the circuit board after the circuit parts have been mounted thereon. Transistors and ICs employed as the circuit parts are bear chips.

### SUMMARY OF THE INVENTION

The present invention provides a system and method for providing a providing an intrinsically safe mobile device in accordance with the appended claims.

### BRIEF DESCRIPTION OF THE DRAWINGS

The present invention, as defined in the claims, can be better understood with reference to the following drawings. The components within the drawings are not necessarily to scale relative to each other, emphasis instead being placed upon clearly illustrating the principles of the present invention.
FIG. 1 is a block diagram illustrating an example of an environment of computer systems and the remote devices utilizing the exemplarily intrinsically safe mobile device of the present invention.
FIG. 2 depicts a cross section view of an example of the intrinsically safe mobile device according to an example embodiment of the present invention.
FIG. 3 depicts a cross section view of an example of the intrinsically safe mobile device with examples of plugs and membranes that enabled the device to be watertight.
FIG. 4 is a block diagram illustrating an example of the power connections of the intrinsically safe mobile device, as shown in FIGs. 2 and 3.
FIG. 5 is a block diagram illustrating an example of an intrinsically safe battery in the intrinsically safe mobile device, as shown in FIGs. 2 and 3. [0019] FIG. 6 a block diagram illustrating an example of an intrinsically safe battery connection for the intrinsically safe mobile device, as shown in FIGs. 2, 4 and 5.
FIG. 6 a block diagram illustrating an example of an intrinsically safe battery connection for the intrinsically safe mobile device, as shown in FIGs. 2, 4 and 5.
FIG. 7 is a block diagram illustrating an example of an over/under voltage protection circuitry in the intrinsically safe battery for the intrinsically safe mobile device, as shown in FIGs. 2, 4, 5 and 6.
FIG. 8 is a block diagram illustrating an example of a DC-DC converter circuitry in the intrinsically safe battery for the intrinsically safe mobile device, as shown in FIGs. 2, 4, 5 and 6.
FIG. 9 is a block diagram illustrating an example of a connections circuitry in the intrinsically safe battery for the intrinsically safe mobile device, as shown in FIGs. 2, 4, 5 and 6.
FIG. 10 is a block diagram illustrating an example of a thermal fuse circuitry in the intrinsically safe battery for the intrinsically safe mobile device, as shown in FIGs. 2, 4, 5 and 6.
FIG. 11 is a block diagram illustrating an example of a structure to seal a PCB connection in the intrinsically safe mobile device, as shown in FIGs. 2, 4, 5 and 6.

### DETAILED DESCRIPTION OF THE INVENTION

The invention to be described hereafter is applicable to all remote devices using an intrinsically safe mobile device system in the present invention. While described below with respect to a smart phone, the intrinsically safe mobile device system of the present invention can be utilized on any mobile device, such as for example but not limited to, smart phones, mobile PCs, laptops, PDAs, pocket PCs, pagers, cellular phones, palm devices, tablet PCs, e-book display devices, headsets and related accessories, sensors or other data capture devices and any portable computing device.

In order to make electrical equipment safe for use in a potentially explosive atmosphere, a design must be addressed "from the ground up." Design around safe operation has to be addressed in parallel with communications and device performance. Users have come to understand the value of a smartphone and its ability to run a myriad of applications, manage email, and other daily tasks that have become a necessary component of daily work. This familiarity with a smartphone must translate to the device a user is issued on the job. Ideally, the device must be of similar size, weight and performance as the one used off the job site.

Once the standards for mobile phone performance and intrinsic safety have been established the design phase can begin. These two aspects maybe governed by various regulatory organizations globally. This disclosure will address aspects of design from a safety standpoint.

Specifically, with respect to the smartphone performance and certifications, there is a broad range of certifications and standards that have been established to maintain performance, network conformity and usability. These include, but are by no means limited to IC, PTCRB, GCF (including field trials), R&TTE, CE, FCC, and many more.

With respect to safety certification, one of the most commonly used concepts for low power equipment (such as mobile devices) is 'Intrinsic Safety'. This disclosure will specifically address design concepts for obtaining the appropriate level of intrinsic safety as defined by various global regulatory organizations.

Intrinsic Safety certification is designed to provide for safe operation of electronic equipment in explosive atmospheres. The theory behind intrinsic safety is to ensure that the available electrical and thermal energy in the system is always low enough that ignition of the hazardous atmosphere cannot occur.

A very small amount of energy is required to cause an ignition, for example, a mixture of Hydrogen in air requires only 20µJ of energy. In electrical circuits the mechanism for the release of this ignition energy is one or more of the following.
- Open circuit or short circuit components or interconnections in a resistive circuit;
- Short circuit of components or interconnections in a capacitive circuit
- Open circuit components or interconnections in an inductive circuit
- Ignition by hot surfaces.

As of July 2003, organizations in the EU must follow the directives to protect employees from explosion risk in areas with an explosive atmosphere. Globally, most countries and multi-national businesses have adopted the EU standard for defining intrinsic safety. In the US, UL 913 is the primary standard, and the EU Standard referred to as ATEX end of the these are similar in their testing methodology.

### ATEX - (ATmosphere EXplosibles - English, Explosive Atmospheres)

There are two ATEX directives (one for the manufacturer and one for the user of the equipment):
- the ATEX 95 *equipment* directive 94/9/EC, Equipment and protective systems intended for use in potentially explosive atmospheres;
- the ATEX 137 *workplace* directive 99/92/EC, Minimum requirements for improving the safety and health protection of workers potentially at risk from explosive atmospheres.

Employers must classify areas where hazardous explosive atmospheres may occur into zones. The classification given to a particular zone, and its size and location, depends on the likelihood of an explosive atmosphere occurring and its persistence if it does.

Areas classified into zones (0, 1, 2 for gas-vapor-mist and 20, 21, 22 for dust) must be protected from effective sources of ignition. Equipment and protective systems intended to be used in zoned areas must meet the requirements of the directive. Zone 0 and 20 require Category 1 marked equipment, zone 1 and 21 require Category 2 marked equipment and zone 2 and 22 required Category 3 marked equipment. Zone 0 and 20 are the zones with the highest risk of an explosive atmosphere being present. See Table 1.

The aim of directive 94/9/EC is to allow the free trade of 'ATEX' equipment and protective systems within the EU by removing the need for separate testing and documentation for each member state.

The regulations apply to all equipment intended for use in explosive atmospheres, whether electrical or mechanical, including protective systems. There are two categories of equipment, I for mining and II for surface industries. Manufacturers who apply its provisions and affix the CE marking and the Ex marking are able to sell their equipment anywhere within the European union without any further requirements being applied with respect to the risks covered. The directive covers a large range of equipment, potentially including equipment used on fixed offshore platforms, in petrochemical plants, mines, flour mills and other areas where a potentially explosive atmosphere may be present.

In very broad terms, there are three preconditions for the directive to apply: the equipment a) must have its own effective source of ignition; b) be intended for use in a potentially explosive atmosphere (air mixtures); and c) be under normal atmospheric conditions.

Manufacturers/suppliers (or importers, if the manufacturers are outside the EU) must ensure that their products meet essential health and safety requirements and undergo appropriate conformity procedures for ATEX certification. This usually involves testing and certification by a 'third-party' certification body but manufacturers/suppliers can 'self-certify' Category 3 equipment (technical dossier including drawings, hazard analysis and user's manual in the local language) and Category 2 non-electrical equipment but for Category 2 the technical dossier must be lodged with a notified body. Once certified, the equipment is marked by the 'CE' (meaning it complies with ATEX and all other relevant directives) and 'Ex' symbol, as shown on to the right, to identify it as approved under the ATEX directive. The technical dossier must be kept for a period of 10 years.

Certification ensures that the equipment or protective system is fit for its intended purpose and that adequate information is supplied with it to ensure that it can be used safely. There are four ATEX classifications to ensure that a specific piece of equipment or protective system is appropriate and can be safely used in a particular application: 1. Industrial or Mining Application; 2. Equipment Category; 3. Atmosphere; and 4. Temperature.

EN 60079-11 outlines the ATEX assessment criteria for zone 1 Explosive Atmospheres, this protection criterion is known as Intrinsic Safety.

### The markings for an ib rated ATEX ATEX Category 2 Marking:

ATEX II 2G Ex ib IIC T4 (IECEx Gb) where the markings a defined as follows:
- **II** - Electrical Equipment intended for use in places with an explosive gas atmosphere (other than mines susceptible to firedamp).
- **2G** - Equipment suitable for Zone 1 (Gas). Zone 1 - A place in which an explosive atmosphere is likely to occur in normal operation or can be expected to present frequently (10 - 1000 hours/year).
- **Ex** - Symbol indicating explosive protection.
- **ib** - Type of protection, Intrinsic Safety as per EN 60079-11 see Table 1 below.
- **IIC** - Explosive gas group, surface industry, typical gas is Acetylene/Hydrogen, < 20µj of ignition energy.
- **T4** - Temperature class, max surface temp of 135°C based on ambient 40°C.

See the table below for further definition.

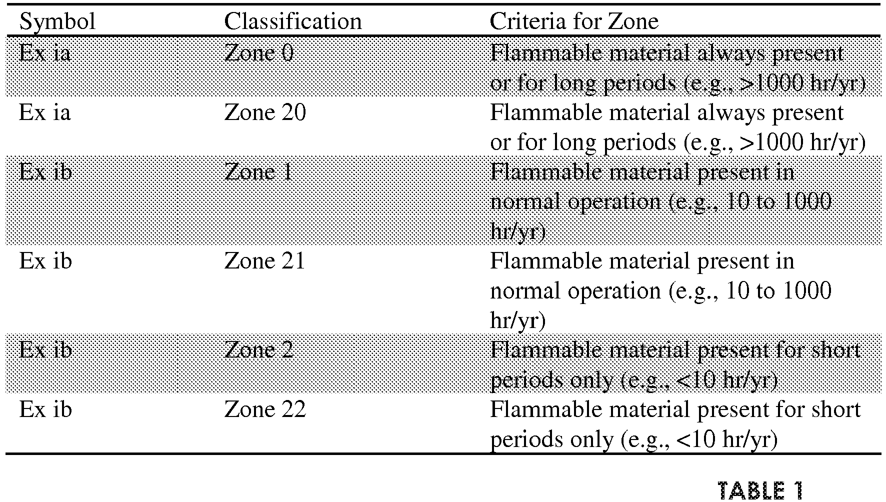

In addressing ATEX standard for Intrinsic Safety, as defined above in Table 1, the level of protection should be defined specific to the use case. In determining the appropriate level of certification, key questions need to be answered, such as where are target users working and is there wireless coverage present. Where zone 0 might reach all employees, wireless service is not likely to exist in these environments. Zone 1 "Ex ib" reaches the majority of the labor force, while operating in areas likely to maintain wireless coverage.

To achieve ib level of protection the ATEX standard requires, in testing or assessing the circuits for spark ignition, a safety factor of 1.5 shall be applied in accordance with 10.1.4.2. The safety factor applied to the voltage or current for the determination of surface temperature classification shall be 1.0 in all cases.

Additionally, ib protection requires a fault assessment on all circuits within the system. The system is defined as the entire electronic apparatus including battery or accessories operating in the ib rated environment. Faults are defined as follows:
- Countable fault -A countable fault is a safety design element that is not fail safe, and can fail under foreseeable conditions.
- Non-countable fault - A non-countable fault is a safety design element that is assumed to fail at any time, and is not relied upon for intrinsic safety protection.
- Infallible isolation - An infallible component or isolation is one that is not subject to a countable fault or remains safe after being subject to a countable fault.

In order to test countable faults to determine infallible isolation the following test standard can apply. Non-countable faults applied may differ in each of the below circumstances.

***Um*** = Maximum voltage that can be applied to the non-intrinsically safe connection facilities of associated apparatus without invalidating the type of protection.

***U*i** = Maximum voltage (peak a.c. or d.c.) that can be applied to the connection facilities of apparatus without invalidating the type of protection.

With ***U*m** and ***U*i** applied, the intrinsically safe circuits in an electrical apparatus with a level of protection "ib" shall not be capable of causing ignition in each of the following circumstances:
In normal operation and with the application of those **non-countable faults** which give the most onerous condition.

In normal operation and with the application of one countable fault plus the application of those non-countable faults which give the most onerous condition.

In normal uses, electrical equipment often creates very small internal sparks in switches, motor brushes, connectors, and in other places. Such sparks can ignite flammable substances present in air. For example, during marine transfer operations when flammable products are transferred between the marine terminal and tanker ships or barges, non-intrinsically safe two-way radio communication is kept to a minimum for safety purposes.

Intrinsic safety can be achieved by ensuring that only low voltages and currents enter the hazardous area, and that all I voltage and currents are protected utilizing other means such as for example but not limited to zener diodes. Sometimes an alternative type of barrier known as a galvanic isolation barrier may be used. Another aspect of intrinsic safety is controlling abnormal small component temperatures. Under certain fault conditions (such as an internal short inside a semiconductor device), the temperature of a component case can rise to a much higher level than in normal use.

The present invention is a passive network device that uses zener diodes, resistors and fuses to safely divert excess electrical energy to ground and thus prevent sparking in or overheating of equipment in hazardous areas. Their key benefits are low cost and the ability to operate with data in analogue DC or high-speed digital forms.

Galvanic isolation is a principle of isolating functional sections of electrical systems to prevent current flow; no metallic conduction path is permitted. Energy or information can still be exchanged between the sections by other means, such as capacitance, induction or electromagnetic waves, or by optical, acoustic or mechanical means.

Galvanic isolation is used where two or more electric circuits must communicate, but their grounds may be at different potentials. It is an effective method of breaking ground loops by preventing unwanted current from flowing between two units sharing a ground conductor. Galvanic isolation is also used for safety, preventing accidental current from reaching ground through a person's body.

Methods employing galvanic isolation:
- Phototransistors are often used to drive HVDC networks
- Transformers couple by magnetic flux. While transformers are usually used to change voltages, isolation transformers with a 1:1 ratio are used in safety applications.
- Optocouplers transmit information by light waves. The sender (light source) and receiver (photosensitive device) are not electrically connected; typically they are held in place within a matrix of opaque, insulating plastic.
- Capacitors allow alternating current (ac) to flow, but block direct current; they couple ac signals between circuits at different direct voltages. As capacitors can and do fail by going short circuit, connecting together circuits that should be isolated, there are special ratings for capacitors used for safety isolation, such as "Class Y" .

With the level of protection determined for a mobile device, an assessment of the product is necessary. An intrinsically safe circuit on such device where "ib" level of safety is sought, must satisfy three basic criteria:
- No spark ignition shall result when the circuit is tested, or assessed as required by Clause 10 for the specified level of protection (see Clause 5) and grouping (see Clause 4) of electrical apparatus.
- The temperature classification of intrinsically safe apparatus shall be carried out in accordance with 5.6 and the temperatures requirements of IEC 60079-0 so as to ensure that ignition is not caused by hot surfaces. Temperature classification shall not apply to associated apparatus.
- The circuit shall be adequately separated from other circuits.

While mobile devices and more particularly smartphones are complex devices, the ATEX assessment can be summarized with the following 8 areas:

Battery - The battery must comply with EN 60079-11 section 7.4 (Primary and secondary cells and batteries) & 10.5 (Tests for cells and batteries). The battery must be tested for spark ignition, max surface temperature (130°C), and Electrolyte leakage and at least 2 levels of protection.

Some types of cells, particularly lithium types, may explode if short circuited or subjected to reverse charging. The use of such cells shall be confirmed by their manufacturer at as being safe and compliant for use in Intrinsically Safe equipment as well as EN 60079-11.

Where the apparatus contains cells that shall not be changed in the explosive atmosphere, the spark ignition discharge at the terminals of a single cell does not require to be tested, provided that the single cell delivers a peak open-circuit voltage of less than 4.5 V (reference EN 60079-11).

A battery that supplies less than 33W under short circuit conditions may be exempt from spark ignition testing. If the battery has the potential to supply more than 33W under short circuit conditions, it must pass a short circuit test, and not exceed a surface temperature of 130°C (T4), electrolyte leakage is not allowed. The test must be conducted on 10 samples, and without the use of protection devices unless said devices are encapsulated with the battery cell.

Capacitance - The total system capacitance cannot exceed the limits outlined in EN 60079-11 table A.2. Circuit capacitance must be limited, to ensure that the available electrical and thermal energy in the system is always low enough that ignition of the hazardous atmosphere cannot occur.

Table A.2 - Allowable capacitance = 370µF (Group IIC, 4.25V, 1.5x safety factor). To maintain performance standards set by communication governing bodies including but not limited to FCC, RT&TE, GCF, PTCRB and others, power requirements exceed 370µF and therefore isolated PCB design and structure must be configured in non-standard mobile phone architecture. Methods for achieving this goal include, but are not limited to:
- The charging circuitry is not to be used in the hazardous environment, therefore it can be ignored as long as it is inactive, and isolated from the rest of the circuitry.
- Eliminate any unnecessary capacitance.
- Limit working voltages to allow for higher capacitance.
- Infallibly isolate major system blocks.
- Evaluate local working voltage.
- Must be fault tolerant.
- Isolate charging circuitry.
- Employ Zener barriers for fault immunity.
- 2 levels of redundancy.
- Local encapsulation of highly capacitive electrical nodes
- Must be infallibly isolated.

Assuming the battery is inherently intrinsically safe (or modified to be IS), managing the system capacitance becomes the tallest hurdle with respect to intrinsic safety and ATEX certification. A very intense and detailed analysis of the system from a capacitance/power perspective is required. The results of this analysis will reveal what capacitance (if any) can be reduced, or eliminated, and what the effective system capacitance really looks like. Based on the effective capacitance, a trade-off study can be completed to identify appropriate areas in the design to be isolated, and encapsulated, or clamped to a more favorable working voltage.

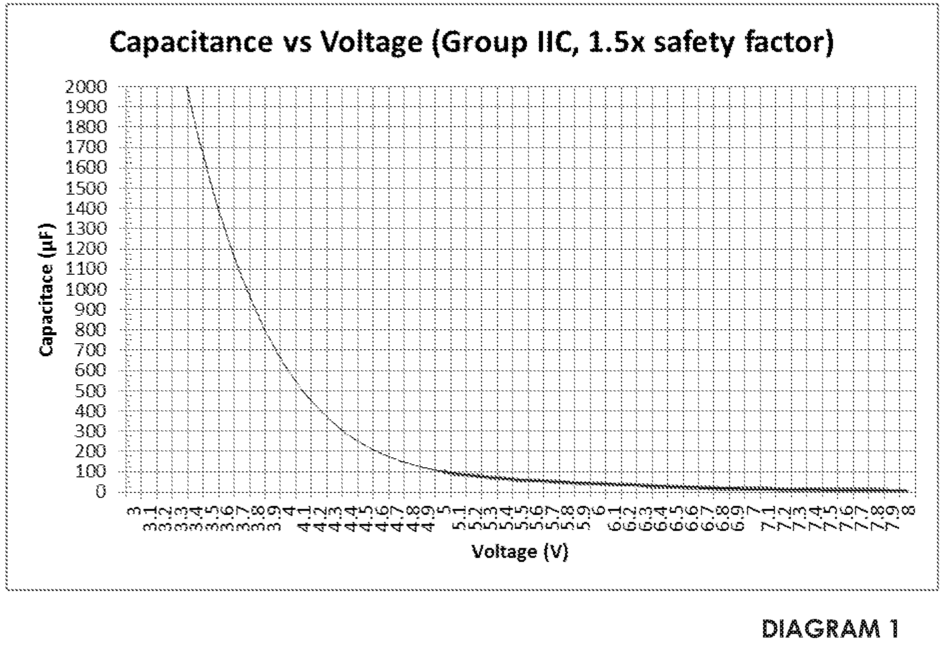

### Inductance - (reference EN 60079-11).

Surface Temperature - Max allowable surface temperature under normal, and fault conditions is 130°C (T4).

Detailed stress analysis required for each component, including battery, PCB Traces, and any wiring.
- Evaluate maximum power dissipation and surface temperature.
- Evaluate under most onerous fault conditions.
- Evaluate at 40°C ambient.
- Perform stress analysis, and address non-compliant components on a case by case basis.

Enclosure - The enclosure must be in compliance with environmental requirements as well as thermal conditioning, and impact tests outlined in IEC 60079-0.
- Housing should be Anti-static in nature.
- Marked properly IAW EN60079-11.
- Subject to drop test IAW IEC 60079-0.
- Battery compartment must be secured with special fasteners IAW EN60079-11.
- External contacts for charging must enclosed.
   - Enclosure ≥ IP30.
   - Contacts must be separated per EN 60079-11 clause 6.3.
- Glass beads (or equivalent) to displace volatile gas.
- May lighten requirements related to spark ignition or surface temp.
- Enclosure should be designed per the specifications of the Environmental Test Plan. Components of this plan include:
   - Highly durable, heat and chemical resistant materials.
   - Shock and Drop Tested to standards such as Mil Std 810 G
   - IP67 or above dust and water proof test
RF - Ignition hazards from RF radiation - Typical threshold power for group IIC is 2W CW max. The system may be utilized for life safety applications and managing the trade-off of communications quality with certification safety has to be managed. PTCRB, GCF, FCC, CE, RT&TE among other wireless radio certifications impact performance guidelines and are established independent of ATEX or UL safety standards.

Establish infallibly limit RF output power to remain compliant without adverse impact to the communications quality of the system.

### Piezo-electric Devices -

The maximum energy stored by the capacitance of a crystal at the maximum measured voltage shall not exceed 50 µJ for Group IIC apparatus.

### Requires impact testing IAW IEC 60079-0

Address non-compliant components on a case by case basis, Energy limiting methods may apply.

Creepage/clearance - Creepage distance - Creepage distance is the shortest path between two conductive parts (or between a conductive part and the bounding surface of the equipment) measured along the surface of the insulation. A proper and adequate creepage distance protects against tracking, a process that produces a partially conducting path of localized deterioration on the surface of an insulating material as a result of the electric discharges on or close to an insulation surface. The degree of tracking required depends on two major factors: the comparative tracking index (CTI) of the material and the degree of pollution in the environment. Used for electrical insulating materials, the CTI provides a numerical value of the voltage that will cause failure by tracking during standard testing.

Clearance distance - Clearance distance is the shortest distance between two conductive parts (or between a conductive part and the bounding surface of the equipment) measured through air. Clearance distance helps prevent dielectric breakdown between electrodes caused by the ionization of air. The dielectric breakdown level is further influenced by relative humidity, temperature, and degree of pollution in the environment.
- External Creepage Distance
- Internal Creepage Distance
- Insulation Thickness
- Clearance Distance

Some things to consider when analyzing the Creepage/Clearance requirements for this or any design are :
- Soldermask does not provide an effective barrier to Creepage.
- Conformal Coating can provide good protection, and eliminate the path for breakdown.
- Running traces under components should be avoided.

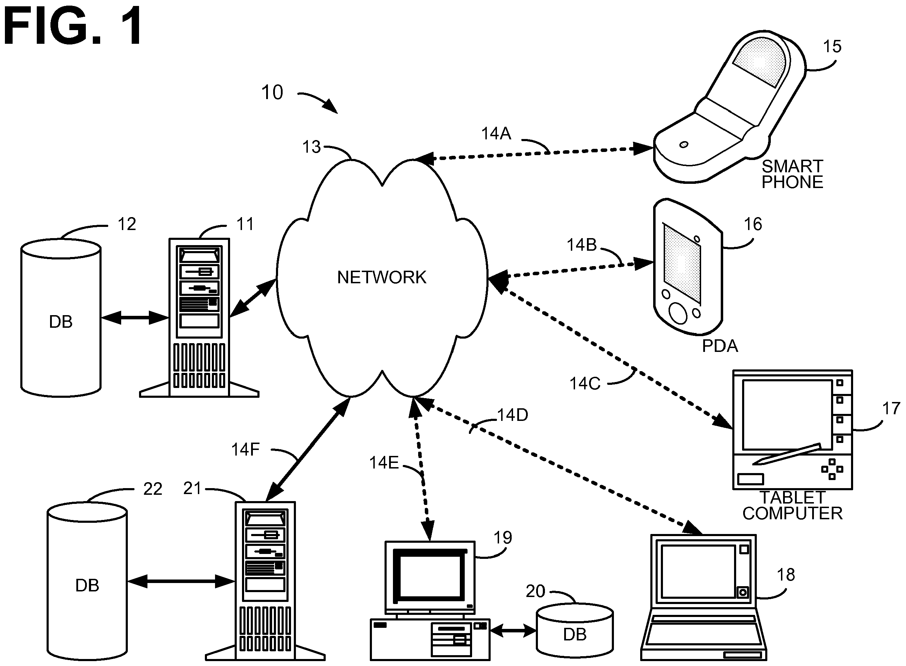

Referring now to the drawings, in which like numerals illustrate like elements throughout the several views, FIG. 1 is a block diagram illustrating an example of a exemplarily intrinsically safe mobile device system 10 environment including computer servers (11 and 21) and the remote devices (15-19) that utilize the intrinsically safe mobile device of the present invention.

Each remote device 15-19 has applications and can have a local data store 16. Computer servers 11 and 21 contain applications and server 11 further contains a server database 12 that is accessed by remote devices 15-19 via intermittent connections 14(A-F), respectively, over network 13. The server 11 runs administrative software for a computer network and controls access to part or all of the network and its devices. The remote devices 15-19 share the server data stored on the database 12 and may access the server 11 over a network 13 such as but not limited to; the Internet, a local area network (LAN), a wide area network (WAN), via a telephone line using a modem or other like networks. The server 11 may also be connected to the local area network (LAN) within an organization.

The remote devices 15-19 may each be located at remote sites. Remote devices 15-19 include but are not limited to; smart phones, mobile PCs, laptops, PDAs, pocket PCs, pagers, cellular phones, palm devices, tablet PCs, e-book display devices, headsets and related accessories, sensors or other data capture devices, any portable computing device and the like. Mobile devices include any of the described remote devices and any electrical device that runs on batteries. Thus, when a user at one of the remote devices 15-19 desires to communicate data to the server 11, the remote devices 15-19 communicates over the network 13, such as but not limited to WAN, internet, or telephone lines to access the server 11. Hereafter, all remote devices will be referred to as remote device 15 for the sake of brevity.

Third party servers 21 and databases 22 can be accessed by the server 11 or the remote devices 15-19. Data that is obtained from third party server 21 and databases 22 can be stored on the server 11 in order to provide later access to the remote device 15-19. It is also contemplated that for certain types of data that the remote device 15-19 can access the third-party vendor's data directly using the network 13.

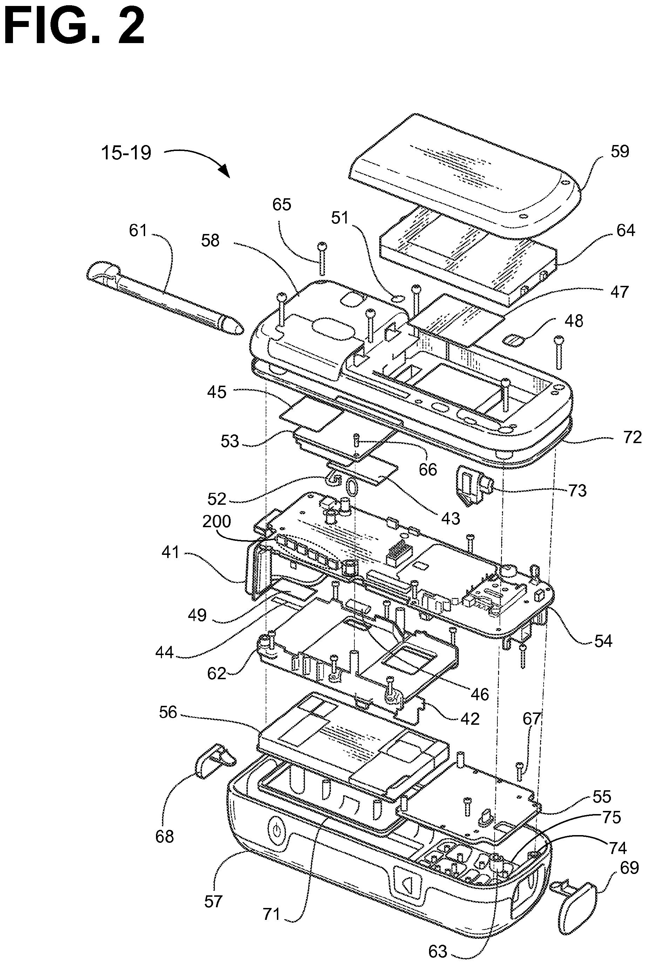

FIGS. 2-3 illustrate exemplary embodiment of the intrinsically safe mobile device 15 constructed in accordance with the present invention. The intrinsically safe mobile device 15 is sufficiently rugged to withstand elevated levels of immersion in a liquid, shock, vibration, impact, etc. and consequently be resistant to damage by crushing, deformation, breakage, disassembly from vibration, etc., found in harsh, demanding environments. To some degree, the level of ruggedness will be implementation specific. Different levels of shock and vibration will be found, for instance, on the deck of drilling rig in hydrocarbon exploration and production than will be found on the floor of a machine shop. However, various military organizations routinely specify standards with respect to these kinds of conditions that are referred to as a "military standard," or "MIL-STD", and MIL-STD can be referred to where applicable, even in civilian contexts, although compliance with mil specs is not necessary to the practice of the invention. For instance, standards are also set by the Underwriters Laboratory, and in particular UL 913, the Standard for Safety of Intrinsically Safe Apparatus and Associated Apparatus for use in Class I, II and III, Division 1 Hazardous Locations.

FIG. 2 depicts a cross section view of an example of the intrinsically safe mobile device 15 according to an example embodiment of the present invention. There are a number of features of the rugged handset device tended to enable it to comply with the Standards for Safety of Intrinsically Safe Apparatus. A few of the features will be described herein below.

In one embodiment a high gain patch antenna 41 is included for increased satellite based derived location performance in sub-optimal environments. The increased satellite based derived location includes methods as provided by GPS, GLONAS, Galileo or the like.

In another embodiment, a spring plate 42 is included to add greater tactile sensation on the PTT (Push-To-Talk) function necessary for operation with gloves, as well as greater durability necessary for continual use. In an alternative embodiment, the PTT spring plate item 42 may include insulation characteristics as not to create a conductive connection in Intrinsically Safe environments.

In another embodiment, an electromagnetic interference (i.e. EMI) gasket 43 is designed to remain in place in rugged shock or impact environments. In another embodiment, EMI MMCX high-adhesive tape 44 is included to improve grounding necessary for operation in Intrinsically Safe designated areas whereas other methods may be subjected to failure as a result of repeated shock or impact.

In another embodiment, a security label 48 is added to detect unauthorized access into the handset after production to prevent tampering and thereby not compromise the inherent safety of the device.

In one embodiment is the main printed circuit board (i.e. PCB) 54 that is designed to provide sufficient spacing of the components on the PCB 54, so that dust particles of certain particulate size cannot create a circumstance where a spark can occur for protection in Intrinsically Safe environments. In another embodiment, the PCB 54 may have conformal coatings on components as additional levels of protection for Intrinsically Safe environments. For rugged applications, the conformal coatings are applied to enhance performance in high vibration conditions and for managing heat displacement in high temperature environments.

Further illustrated is the keymat 75 and related snap domes 55. The contact points of the snap dome 55 are sealed for rugged and Intrinsically Safe applications to prevent against dust and or particulate contamination. The front cover 57 and rear cover 58 prevent against dust and/or particulate contamination as well as providing for the entire device to functionally deform under high impact situations and return to its static form without causing a catastrophic failure in the intrinsically safe mobile device 15.

The battery door 59 utilizes a flush mounted design where a ribbed gasket 72 provides for a water tight seal in rugged and intrinsically safe applications, but allows for the entire device to functionally deform under high impact situations and return to its static form without causing a catastrophic failure in the intrinsically safe mobile device 15. A traditional method of tongue and groove interlocking parts under high impact may not allow for parts to shift or move caused by an impact event such as a drop or fall. In one embodiment, the ribbed gasket 72 is a double ribbed gasket or a plurality of ribs gasket. However, it is understood that the ribbed gasket 72 will accomplish the watertight seal with at least one rib.

In one embodiment, steel fasteners 65 maintaining structural integrity of the intrinsically safe mobile device 15, even during structural duress caused by an impact on the device. In the preferred embodiment, non-corrosive stainless steel fasteners 65 are utilized to provide for rugged and intrinsically safe applications.

The flush mounted battery door 59 described above, is coupled with the ribbed gasket and 72, and all conjoin to enabling parts to shift, but without adversely impacting the integrity of the entire design of the intrinsically safe mobile device 15.

The stylus 61 is insertable inside a stylus cavity (not shown), is an independent channel for storing the stylus 61 while fully separate from the interior of the intrinsically safe mobile device 15.

Also illustrated is the display frame 62. This frame 62 serves multiple purposes in rugged and intrinsically safe applications. In the preferred embodiment, the frame 62 is constructed from magnesium, however it is understood that other lightweight non-ferrous metals may be utilized. The display frame 42 protects the display 56 from twist and torque loads that may crack or destroy the display 56 by isolating stress around and away from the display 56. Further the display frame 62 applies the appropriate and necessary pressure between the front cover 57 and the display gasket 71 to ensure a water tight seal without applying such pressure as to alter the performance of the touch screen display 56.

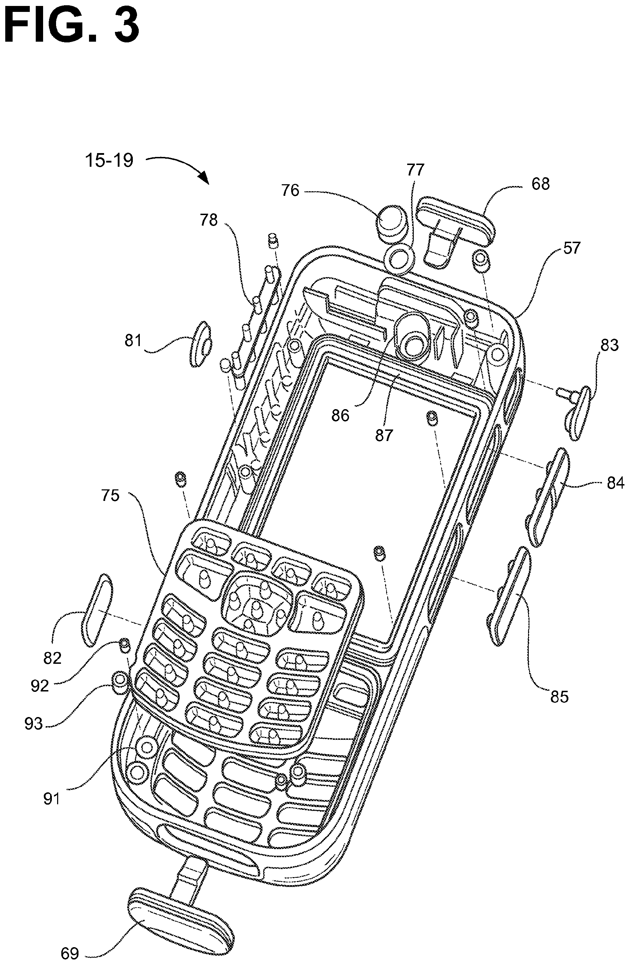

Also illustrated in FIG. 3, is a marine rated microphone 92 that is permanently sealed and glued into a cast cavity for rugged and intrinsically safe applications. A hydrophobic membrane (not shown) provide a liquid barrier between the receiver and the opening to the outside of the intrinsically safe mobile device 15 to provide for rugged and intrinsically safe applications. In an alternative embodiment, the hydrophobic membrane is also oleophobic. This hydrophobic membrane is preferably adhered, glued or the like into place independently from the microphone 92, to obtain a dust proof (dust of any particulate size) and water tight (a depth of 1 meter of water for at least 30 minutes) integrity and to preserve audio quality in the microphone 92. In an alternative embodiment other types of microphones could be utilized as long as they are shielded from water, dust, and grass.

A lithium-ion battery 64 is specified to meet power and chemistry limitations associated with intrinsically safe applications. However, it is understood that any battery of sufficient power may be utilized.

Also illustrated in FIG. 2, are non-corrosive stainless steel fasteners 65, 66 and 67 and accompanying nut inserts 93 (FIG. 3) are for rugged and intrinsically safe applications that independently secure the main PCB 54 (FIG. 2) and the keymat 75 with a minimum spacing of at least 1 mm from the interior edge of the front cover 57 in FIG. 2. The nut inserts 93 (FIG. 3) are preferably of a material that can withstand heat or not be subject to galvanic corrosion. In the preferred embodiment, main PCB 54 and keymat 75 are anchored in place and further secured by insulating bushings isolate critical components from the transfer of impact energy, torque, twist or other destructive force that could damage or impair the performance of such critical components. Nut inserts 92 (FIG. 3) are placed into cast holes 91 that are offset from the edge of the device and have double reinforcement. The GPS patch antenna part 41 (FIG. 2) is secured in place in a cast slot with at least 1 mm minimum perimeter spacing as applied to the main PCB 54 and keymat 75 and.

In one alternative embodiment, a vibration motor 73 of sufficient strength for user notifications in environments not conducive to audible notifications. The vibration motor 73 is of brush-less design so as not to create a spark, or as to be compliant with necessary certifications in an intrinsically safe environment.

The front cover 57 is cast from a static dissipative material that prevents charge generation on material surface thereby controlling particulate attraction in preventing electrostatic discharge events or the like material, with a wall thickness of no less than 2 mm. Front cover 57 in one embodiment includes rounded corners, internal support ribbing, and raised reinforcement around openings all to improve the structural integrity of the cover.

Illustrated in FIG. 3 is a marine rated receiver 76 that is permanently sealed and glued into a cast cavity 86 for rugged and intrinsically safe applications. A hydrophobic membrane 77 provide ands a liquid barrier between the marine rated receiver 76 and the opening to the outside of the intrinsically safe mobile device 15 to provide for rugged and intrinsically safe applications. In an alternative embodiment, the hydrophobic membrane 77 is also oleophobic. This membrane 77 is preferably adhered, glued or the like into place independently from the receiver 76 to obtain a dust proof (dust of any particulate size) and water tight (a depth of 1 meter of water for at least 30 minutes) integrity and to preserve audio quality in the receiver.

Also illustrated, are the mini-SD 68 and USB, audio, and system reset port 69 plugs respectively. In the preferred embodiment, these plugs are V1 or V0 rated rubber parts to remain heat resistant or fire retardant as needed for rugged or Intrinsically Safe applications. In one embodiment, the plugs 68, 69 and 81-85, have at least one micro rib to prevent against water and dust ingress when secured in place. In the preferred embodiment, the plugs 68, 69 and 81-85 and have multiple micro-ribs to prevent water and dust ingress.

Illustrated in FIG. 3 is an alternative embodiment of a light pipe 78 that conveys system status information visible to the user on the surface of the device while keeping LED elements (not shown) at a distance from the surface of the intrinsically safe mobile device 15 where they can be damaged or the compromised.

Illustrated in FIG. 3 is the keypad 75 that is preferably designated as a V1 or V0 rated silicon material, so as to maintain a non-conductive interface with the user as further described in FIG. 3. However, it is contemplated by the inventors that other nonconductive materials may be utilized for keypad 75.

Also illustrated in FIG. 3 is a power button 81 that is preferably designated as a V1 or V0 rated rubber material so as to maintain a non-conductive interface with the user. However, it is contemplated by the invent him and ors that other nonconductive materials may be utilized for power button 81.

Illustrated in FIG. 3 is an emergency function button 82, a PTT button 85 and a volume button 84. Preferably, all or most of these components are V1 or V0 rated rubber components to remain heat resistant or fire retardant in rugged or Intrinsically Safe applications. Preferably, all of these components come with multiple ribbed features to ensure that openings remain dust proof (dust of any particulate size) and water tight (a depth of 1 meter of water for at least 30 minutes). However, in alternative embodiments, these components come with at least one rib feature.

Illustrated in FIG. 3 is the rear cover 58 which is also shown as rear cover 19/1 in FIG. 2, is cast from a static dissipative material that prevents charge generation on material surface thereby controlling particulate attraction and preventing electrostatic discharge events or the like material, with a wall thickness of no less than 2 mm. Rear cover 58 in one embodiment includes rounded corners, internal support ribbing, and raised reinforcement around openings all to improve the structural integrity of the cover. The rear cover 58 has a slot to support the main gasket 72. This main gasket 72 is used in conjunction with the flush mount flat face of the front cover 57 and secured by main screws 65 (FIG. 2) to create a dust and water tight seal while allowing the intrinsically safe mobile device 15 to flex, shift, move, torque or otherwise distort during an impact and return without a catastrophic or destructive effect on the device retaining its integrity in rugged or intrinsically safe applications.

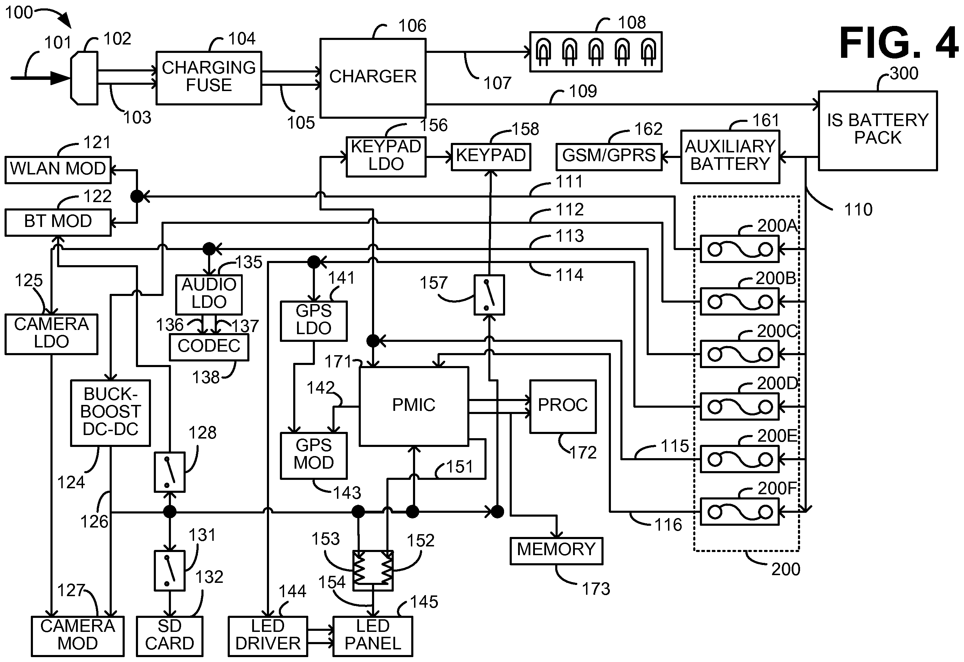

FIG. 4 is a block diagram illustrating an example of the power connections of the intrinsically safe mobile device 15, as shown in FIGs. 2 and 3. In this example, fuses 200 are use to prevent any operational components from drawing too much current or voltage from the battery pack 300 that would cause the intrinsically safe mobile device 15 to lose its intrinsically safe capability.

Connector 102 enables a user to charge the battery 300 through the use of a wall adapter or USB host connector 101. Power from either the AC wall adapter or USB host connector is conducted via line 103 to charging fuse 104. Charging fuse 104 prevents the charger circuit 106 and intrinsically safe battery 300 from drawing too much current or voltage that would cause the intrinsically safe mobile device 15 to lose its intrinsically safe capability.

Charging fuse 104 then provides power to charger circuit 106 via lines 105. The charger circuit 106 indicates the amount of stored energy in battery 300 using LED string 108 via line 107. Charger circuit 106 provides a direct connection to the intrinsically safe battery pack 300 via power line 109. It is in this way charger circuit 106 isolates incoming power from operational components by being directly connected to the intrinsically safe battery 300.

The intrinsically safe battery pack 300 further connects to operational components through fuse circuits 200. Each operational component receives power through the intrinsically safe battery pack 300 through one or more fuses 200 A-F. In this particular example, the intrinsically safe battery pack 300 is also connected to the GSM/GPRS radio transceiver 162 through auxiliary battery 161. Other transcvers such as, but limited to can be used, GSM, EDGE, HSDPA, HSPA+, CDMA. As shown in FIG. 4, power for the WLAN module 121 and Bluetooth module 122 is received through fuse 200A via power link 111.

In the illustrated example, the camera module 127 receives power be at two fuse circuits 200B and 200C on power links 112 and 113 respectively. Power link 112 is connected to the buck boost DC to DC regulator 124 and further powers the camera module via power link 126. Camera module 127 also receives power via power link 113 connected to the camera LDO 125 that further provides operational power to the camera module 127. The camera LDO 125 and audio LDO 135 are low dropout regulators to ensure a clean power source to the respective operational components. Power link 113 is further connected to the audio LDO 135 and codec 138. The audio LDO is a low dropout regulator that provides clean power of the codec 138 via links 136 and 137.In the illustrated example, fuse circuit 200D provides power to the GPS LD 01 41 and GPS module 143 through power link 114. Power from fuse circuit 200D via power link 114 further provides power to the LED driver 144 that provides a white backlights for LED panel 145. The LED panel 145 further receives main power via power line 126 and power link 151 from the power management IC 171 is further controlled by resistors circuits 152 and 153 and provided to the LED panel 145 via power link 154.

Fuse circuitry 200E provide power to the power management IC 171 via power link 115. Power link 115 further provides power to the keypad LDO 156 and keypad 158. Main power to keypad 158 is provided via a link power link 126 through switch 157. It is this main power via power link 126 that provides operational power to the keypad 158.

Fuse circuitry 200F provides power via a power link 116 to the power management IC 171 it is through the power management IC that provides power to the processor 172 and memory 173. Power to the Bluetooth module 122 and SD card module 132 is provided by power Link 126 through switches 128 and 131 respectively.

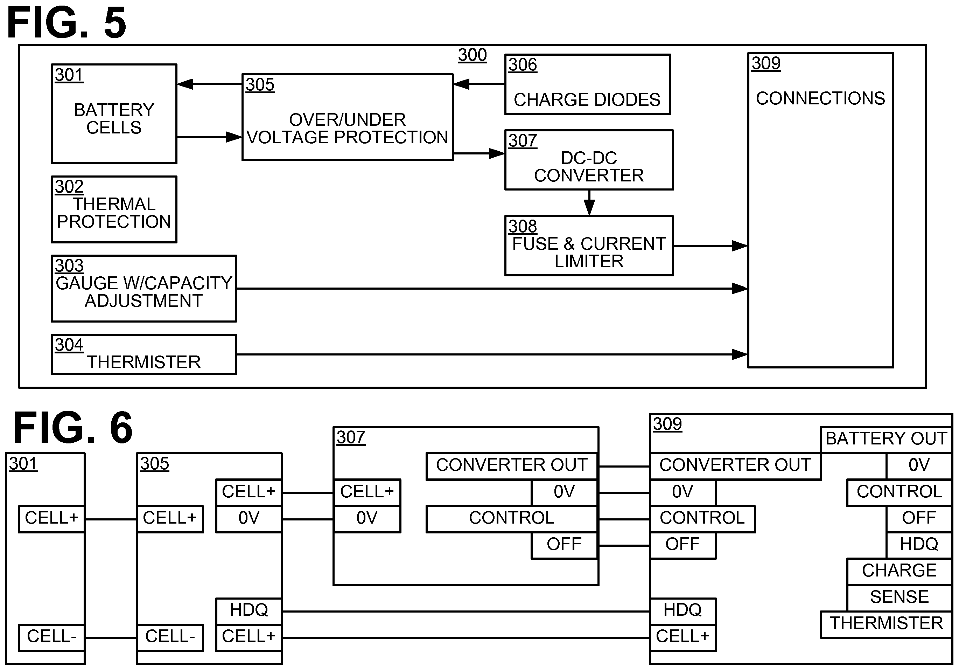

FIG. 5 is a block diagram illustrating an example of an intrinsically safe battery 300 in the intrinsically safe mobile device 15, as shown in FIGs. 2 and 3. A fully charged Li-Ion battery can provide 4.25 volts to a circuit. At this voltage, the potential heat or spark that could be generated from such a voltage could create a risk in a potentially explosive environment. In order to remain safe for explosive environments the battery should be limited to 3.75v - and thereby not exceed this nominal value. With respect to mobile phones, the must also minimum value of 3.3v in order to operate a mobile communications radio such one that operates on GSM, EDGE, HSDPA, HSPA+, CDMA or other such like technologies. By conventional means, one could place resistors between the battery cell and the PCB circuit, but that would be the equivalent to utilizing only half of the battery's capacity. In order to maintain a size and weight reasonable for a mobile phone, this conventional means may be considered ineffective.

In implementation of a DC - DC converter, which essentially steps down or up voltages to regulate the power output of a circuit, would be a standard approach to managing power coming from a battery. Such converters are not out of the ordinary for particular battery powered devices. A unique and new approach is to place a DC-DC converter in the battery pack itself separate and apart from the main PCB of a device. Several key reasons for this approach is to 1) ensure that a catastrophic discharge of the cell would be relegated to the cell or battery pack and could no way reach the main PCB thereby creating a volatile reaction such as an arc to another component on the board; 2) control re-engineering costs of PCB's and devices, by altering the architecture of different batteries to achieve the same safety goals of a device; 3) engineer battery packs to be fundamentally safe at the terminals by regulating power output prior to integration with a main circuit; 4) integrate the DC-DC converter with a battery cell inside a waterproof and dustproof and fully potted housing according to IP68 standards to further segregate risk from a battery powered device.

As shown the intrinsically safe battery 300 comprises of components battery cells 301 connected bi-directionally to the over/under voltage protection circuit 305. The over/under voltage protection circuit 305 is connected to receive power via charge diodes 306 and regulate power output via the DC to DC converter 307. As stated above, the DC - DC converter, essentially steps down or up voltages to regulate the power output of a circuit. The DC-DC converter 307 is further connected to fuse and current limiter circuitry 308. The fuse and current limiter circuitry 308 provide safety in that should the battery cells be pushing too much current through the fuse and current limiter 308, that the fuse and current limiter 308 would activate an trip the fuse thereby preventing a catastrophic failure. The fuse and current limiter 308 is further connected to one of the battery connections on module 309.

The thermal protection module 302 provides further protection that should any component between the battery cells 301 and connections 309 exceed their heat limit, that the thermal protection module 302 would deactivate the power from battery cells 301 to any other component. The gauge with capacity adjustment module 303 acts to provide active power management within the intrinsically safe battery pack 300. A thermistor module 304 provides for additional thermal protection of connections in the connections module 309 that would cause a fuse to blow thereby preventing the intrinsically safe battery package 302 exceed temperature limits.

FIG. 6 a block diagram illustrating an example of an intrinsically safe battery connections for the intrinsically safe mobile device 15, as shown in FIGs. 2, 4 and 5. As shown, the connection between the battery cells 301 over/under voltage protection 305 DC to DC converter 307 and connections module 309 are illustrated.

As illustrated, the battery cells 301 have the positive and negative terminals connected to the positive and negative terminals of the over under/under voltage protection circuitry 305. From these inputs, the over/under voltage protection circuit 305 passes the positive cell voltage as well as a ground to the DC to DC converter 307. The over/under voltage protection circuit 305 further provides connections modules 309 consisting of the battery cell 301 positive voltage as well as the HDQ component. Since the voltage is regulated entering the device 15, the HDQ provides a data connection from the cell to the operating systems of the mobile device to determine actual battery cell voltage.

The DC-DC converter module 307 received the positive cell voltage as well as ground voltage from the over/under voltage protection circuit 305 and outputs the converter out signal as well as the ground voltage to the connections module 309. The DC-DC converter 307 further receives a control and off signals from the connections module 309.

The connections module 309 receives the converter out component from the DC to DC converter 307 as well as interacting with the DC to DC converter with regard to the ground voltage. The connections module 309 further provides to the DC-DC converter 307 the control and off signals. Furthermore, the connections module 309 further interacts with the over/under voltage protection circuit 305 with regard to the HDQ signal and provides the cell plus voltage to the over/under voltage protection service 305.

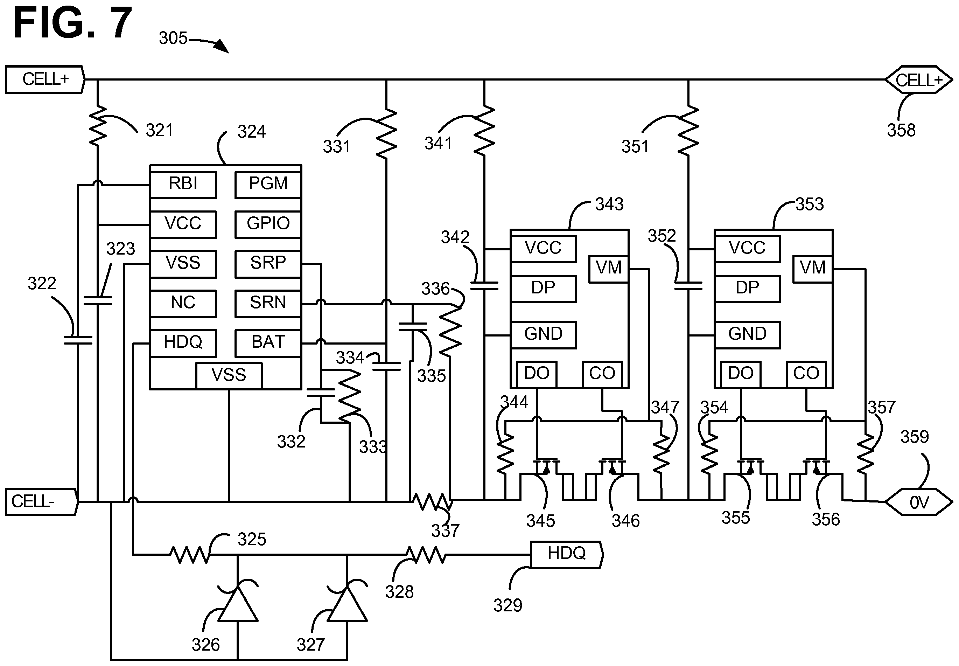

FIG. 7 is a block diagram illustrating an example of an over/under voltage protection circuitry 305 in the intrinsically safe battery 300 for the intrinsically safe mobile device 15, as shown in FIGs. 2, 4, 5 and 6. The over/under voltage protection circuitry 305 provides overvoltage protection under voltage protection and over current protection. As illustrated, the battery cells 301 has the positive (i.e. cell +) and negative (cell -) terminals connected to the positive and negative terminals of the over under/under voltage protection circuitry 305. The positive (i.e. cell +) voltage from the battery cells 301 is connected straight through to the cell + voltage terminal 358. The positive (i.e. cell +) voltage from the battery cells 301 is further connected to IC chip 324 VCC pin through resistor 321. IC chip 324 in one embodiment is a BQ27000 integrated circuit. The power from cell + battery cells 301 further proceeds through capacitors 323 to connect with the cell - battery cells 301. This provides the lower voltage setting. Integrated circuit 324 RBI terminal is further connected to cell - of battery cells 301 through capacitors 322 and serves as input voltag. The HDQ terminal of IC 324 is connected in series through resistors 325 and 328 to the HDQ signal 329. Connected in parallel with senior diodes 326 and 327 between these two resistors is the output of cell - from battery cell 301. It is the circuitry that creates the HDQ signal 329.

Integrated circuit 324 has two VSS terminals both connected to the output of cell - from battery cell 301. In addition, the integrated circuit 324 is further connected to the output of the cell - from battery cell 301 through capacitor 332 and resistor 333 connected in parallel. Further connected to the output of cell - from battery cell 301 is the power from cell + terminal of battery cells 301 through resistor 331 and capacitors 334 in series. The output of resistor 331 and the input of capacitor 334 is connected to the battery terminal of the integrated circuit 324. The integrated circuit 324 has the SRN-terminal connected to the output of cell - from battery cell 301 through capacitor 335. The SRN terminal of integrated circuit 324 is further connected to resistor 336 that is connected in parallel with resistor 337 connected to the output of cell - from battery cell 301.

The positive (i.e. cell +) voltage from the battery cells 301 is connected to the VCC terminal of integrated circuit 343 through resistor 341. Moreover, the VCC terminal of integrated circuit 343 is further connected to ground and the output of resistor 337 from ground of integrated circuit 343, and is further connected to resistor 344 and the gate input to transistor 345. The output of resistor 344 is connected to the VM terminal of integrated circuit 343 and the gate input to transistor 346. Transistor 345 is connected to the DO terminal of IC 343 and the transistor 346 is further connected to the CO terminal of IC 343.

The positive (i.e. cell +) voltage from the battery cells 301 is connected to the VCC terminal of integrated circuit 353 through resistor 351. Moreover, the VCC terminal of integrated circuit 353 is further connected to ground and the input of transistor 346, and is further connected to resistor 354 and the gate input to transistor 355. The output of resistor 354 is connected to the VM terminal of integrated circuit 353 and the gate input to transistor 356. Transistor 355 is connected to the DO terminal of IC 353 and the transistor 356 is further connected to the CO terminal of IC 353.

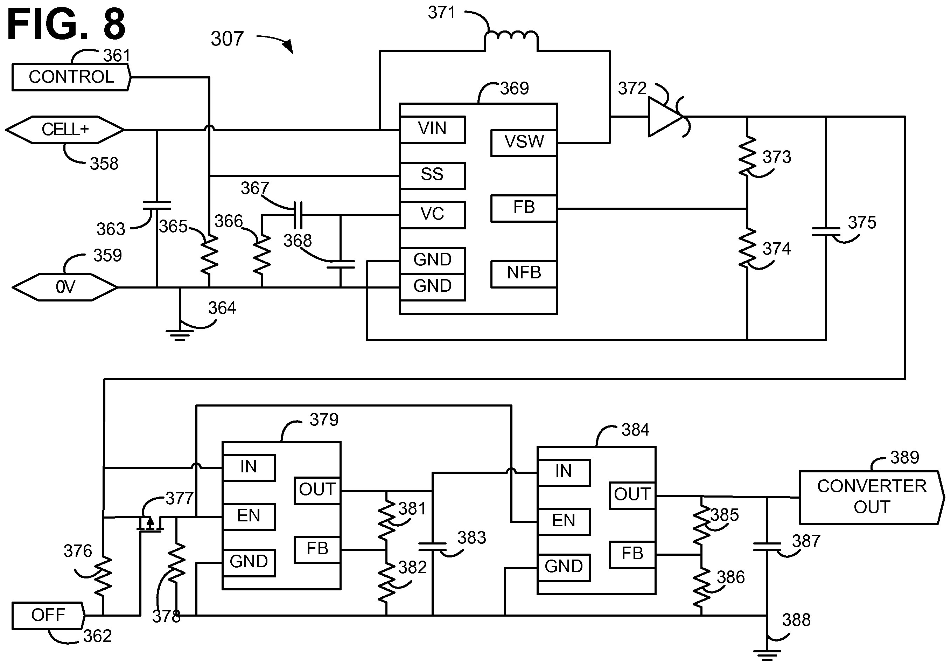

FIG. 8 is a block diagram illustrating an example of a DC-DC converter circuitry in the intrinsically safe battery for the intrinsically safe mobile device, as shown in FIGs. 2, 4, 5 and 6.

The controls signal 361 is connected to ground through resistor 365. The output of cell +358 is connected to the zero voltage terminal 359 through capacitor 363. The output of 0V 359 is further connected to ground 364. The control signal 361 is further connected to the SS terminal of the integrated circuit 369. The output of 0V terminal 359 and ground 364 is further connected to the VC of integrated circuit 369 through resistor 366 and capacitor 367 in parallel with capacitor 368. Two different ground terminals of integrated circuit 369 are connected to the output of 0V terminal 359 and ground 364. The output of cell +358 is connected to the VIN terminal of integrated circuit 369 as well as the PSW terminal through inductor 371. The output of inductor 371 is input into the zener diode 372 which is further provided to the off terminal 362 through resistor 376. The output of the zener diode 372 is connected to the FB terminal of integrated circuit 369 through resistor 373 and to ground of IC 369 through resistors 373 and 374 in series. The output of the zener diode 372 is further connected to ground of integrated circuit 369 through capacitor 375. The output of the zener diode 372 is further connected to the EN terminal of integrated circuit 379. The output of off terminal 362 is input into the EN terminal of integrated circuit 379 through transistor 377. The output of transistor 377 is further provided to grounded through resistor 378. The out terminal of integrated circuit 379 is connected to ground 388 through capacitor 383. The out terminal of integrated circuit 379 is further connected to the FB terminal of integrated circuit 379 through resistor 381 and ground through resistor 382. The out terminal of integrated circuit 379 is further connected to the IN terminal of transistor 384. The output of transistor 377 is also input into the EN terminal of integrated circuit 384.

The ground terminal of integrated circuit 384 is connected to ground 388. The out terminal of integrated circuit 384 is connected to ground 388 through capacitor 387. The out terminal of integrated circuit 384 is further connected to the FB terminal of integrated circuit 384 through resistor 385 and ground through resistor 386. The out terminal of integrated circuit 379 is further connected to the converter out terminal 389.

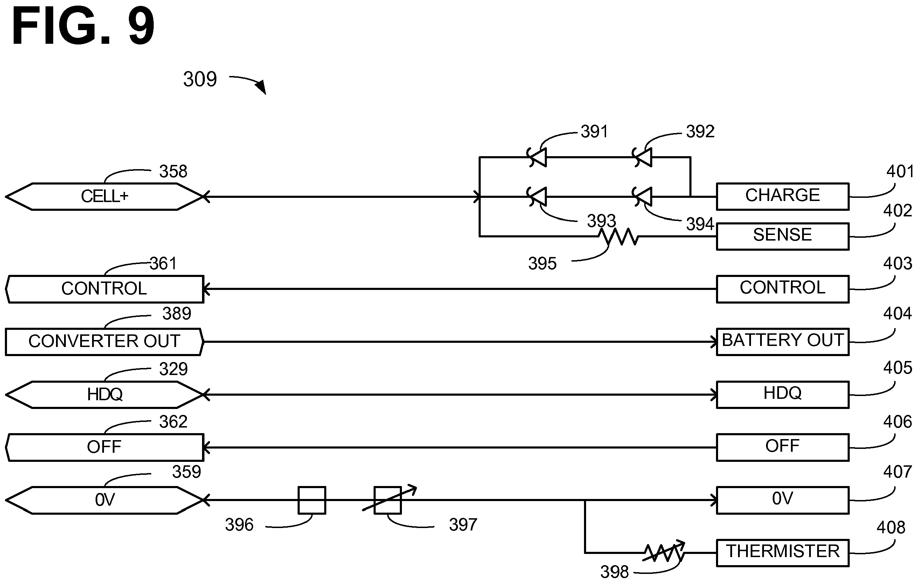

FIG. 9 is a block diagram illustrating an example of a connections circuitry 309 in the intrinsically safe battery 300 for the intrinsically safe mobile device 15, as shown in FIGs. 2, 4, 5 and 6. The connections circuitry 309 provides interactive voltages for cell +358 and zero voltage 359. Moreover connections circuitry 309 provides interactive signals HDQ and allows input of the control signal 361 and off signal 362. The charge signal 401 is provided by the cell +358 through pairs of zener diode 391 and 392 in series and 393 and 394 in series, but in parallel with diodes 391 and 392. The sense signal is generated from the cell +358 through resistor 395. The control signal 403 is input through the connections circuitry 309 into the intrinsically safe battery pack circuitry 300 the converter out signal 389 is provided in the battery out terminal 404. The interactive HDQ signal 329 is output using connector through HDQ 405. The off signal 406 is input into the intrinsically safe battery pack 300 to terminal 362. Zero voltage terminal 359 is provided through two fuses 396 and 397. The fuses work for both charging and discharging and they are also connected through to the thermistor connector 408 through variable resistor 398. Fuse 397 is a temperature fuse and fuse 396 is a current fuse.

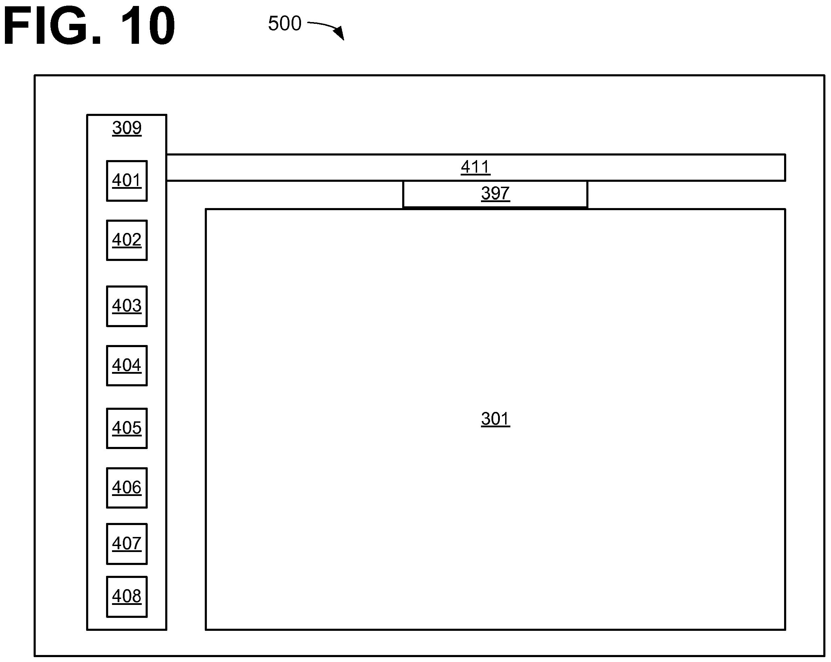

FIG. 10 is a block diagram illustrating an example of a thermal fuse circuitry 397 in the intrinsically safe battery 300 for the intrinsically safe mobile device15, as shown in FIGs. 2, 4, 5 and 6. Showing connectors circuitry 309 connections 401-408 are connected to a PCB circuitry for 11. The thermal fuse circuitry 397 is connected to the PCB circuitry for 11 and the battery cells 301. The thermal fuse will trip on those instances where the heat generated from battery cells 301 exceed maximum temperature and threaten a catastrophic failure.

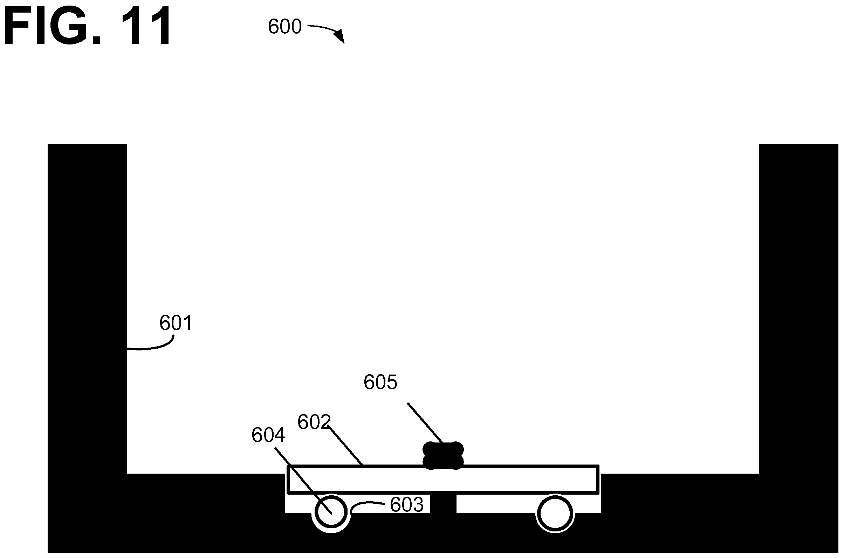

FIG. 11 is a block diagram illustrating an example of a structure to seal a PCB connection in the intrinsically safe mobile device 15, as shown in FIGs. 2, 4, 5 and 6.

As shown, PCB 602 is within enclosure 601. The PCB 602 rests upon O-rings 604 that further rest in the enclosure in a groove 603. A melted stud attaches the PCB to the enclosure which then allows for the further encapsulation by sealing the opening of the enclosure with an encapsulation material (not shown).

Any process descriptions or blocks in flow charts should be understood as representing modules, segments, or portions of code which include one or more executable instructions for implementing specific logical functions or steps in the process. Alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

It will be apparent to those skilled in the art that many modifications and variations may be made to embodiments of the present invention, as set forth above, without departing substantially from the principles of the present invention. All such modifications and variations are intended to be included herein within the scope of the present invention, as defined in the claims that follow.

## Claims

1. An intrinsically safe mobile device (15) having a housing, the intrinsically safe mobile device (15) comprising:
a PCB (54);
a plurality of fuse circuit components (200A-200F) on the PCB (54);
a plurality of operational component circuits on the PCB (54);
an intrinsically safe battery pack (300) that is directly connected to the plurality of fuse circuit components (200A-200F), wherein the intrinsically safe battery pack (300) comprises a DC to DC converter unit (307) and an under/over voltage protection circuit breaker (305); and
a charger circuit (106), wherein the plurality of fuse circuit components (200A-200F) are connected to the plurality of operational component circuits on the intrinsically safe device (15) and wherein each of the plurality of fuse circuit components (200A- 200F) is configured to trip when the current to its connected operational component circuit exceeds a predetermined threshold, **characterised in that** the device (15) includes a USB input (102) connected to the charger circuit (106), wherein insertion and subsequent removal of a USB charger in the USB input (102) causes the under/over voltage protection circuit breaker (305) to be reset.

2. The intrinsically safe mobile device of claim 1, wherein the intrinsically safe battery pack further comprises: a thermal limiting fuse circuit.

3. The intrinsically safe mobile device of claim 1, further comprising: a conformal coatings on the plurality of fuse circuit components on the PCB to prevent a spark when the intrinsically safe mobile device is in a volatile location.

4. The intrinsically safe mobile device of claim 1, further comprising: a conformal coatings on the plurality of operational component circuits to prevent a spark when the intrinsically safe mobile device is in a volatile location.

5. A method for creating an intrinsically safe mobile device (15) having a housing, the method comprising:
attaching a plurality of fuse circuit components (200A-200F) to a PCB (54);
attaching a plurality of operational component circuits on the PCB (54);
attaching an intrinsically safe battery pack (300) that is directly connected to the plurality of fuse circuit components (200A-200F), wherein the intrinsically safe battery pack (300) comprises a DC to DC converter unit (307) and an under/over voltage protection circuit breaker (305);
attaching a charger circuit (106) that directly connects to the intrinsically safe battery pack (300), wherein the plurality of fuse circuit components (200A-200F) are connected to the plurality of operational component circuits on the intrinsically safe device (15) and wherein each of the plurality of fuse circuit components (200A- 200F) is configured to trip when the current to its connected operational component circuit exceeds a predetermined threshold;
providing a USB input (102), wherein the USB input (102) is connected to the charger circuit (106), wherein insertion and subsequent removal of a USB charger in the USB input (102) causes the under/over voltage protection circuit breaker (305) to be reset; and
attaching the PCB to the housing.

6. The method of claim 5, wherein the intrinsically safe battery pack further comprises: a current limiting fuse circuit.

7. The method of claim 5, further comprising: providing a conformal coatings on the plurality of fuse circuit components on the PCB to prevent a spark when the intrinsically safe mobile device is in a volatile location.

8. The method of claim 5, further comprising: providing a conformal coatings on the plurality of operational component circuits to prevent a spark when the intrinsically safe mobile device is in a volatile location.

## Patentansprüche

1. Eigensicheres Mobilgerät (15) mit einem Gehäuse, wobei das eigensichere Mobilgerät (15) umfasst:
eine PCB (54);
eine Mehrzahl von Sicherungsschaltungskomponenten (200A-200F) auf der PCB (54);
eine Mehrzahl von Betriebskomponentenschaltungen auf der PCB (54);
einen eigensicheren Akku (300), der direkt mit den mehrzähligen Sicherungsschaltungskomponenten (200A-200F) verbunden ist, wobei der eigensichere Akku (300) eine DC-DC-Wandlereinheit (307) und einen Unter-/Überspannungsschutzschalter (305) umfasst; und
eine Ladeschaltung (106), wobei die mehrzähligen Sicherungsschaltungskomponenten (200A-200F) mit den mehrzähligen Betriebskomponentenschaltungen an dem eigensicheren Gerät (15) verbunden sind und wobei jede der mehrzähligen Sicherungsschaltungskomponenten (200A-200F) dafür konfiguriert ist auszulösen, wenn der Strom zu ihrer verbundenen Betriebskomponentenschaltung einen vorgegebenen Schwellenwert übersteigt, **dadurch gekennzeichnet, dass** das Gerät (15) einen USB-Eingang (102) hat, der mit der Ladeschaltung (106) verbunden ist, wobei das Einsetzen und das anschließende Entfernen eines USB-Ladegeräts in den bzw. von dem USB-Eingang (102) das Zurücksetzen des Unter-/Überspannungsschutzschalters (305) bewirkt.

2. Eigensicheres Mobilgerät nach Anspruch 1, wobei der eigensichere Akku ferner eine wärmebegrenzende Sicherungsschaltung umfasst.

3. Eigensicheres Mobilgerät nach Anspruch 1, ferner umfassend: eine konforme Beschichtung auf den mehrzähligen Sicherungsschaltungskomponenten auf der PCB zur Verhinderung eines Funken, wenn sich das eigensichere Mobilgerät an einem explosionsgefährdeten Ort befindet.

4. Eigensicheres Mobilgerät nach Anspruch 1, ferner umfassend: eine konforme Beschichtung auf den mehrzähligen Betriebskomponentenschaltungen zur Verhinderung eines Funken, wenn sich das eigensichere Mobilgerät an einem explosionsgefährdeten Ort befindet.

5. Verfahren zum Schaffen eines eigensicheren Mobilgeräts (15) mit einem Gehäuse, wobei das Verfahren umfasst:
das Befestigen einer Mehrzahl von Sicherungsschaltungskomponenten (200A-200F) auf einer PCB (54);
das Befestigen einer Mehrzahl von Betriebskomponentenschaltungen auf der PCB (54);
das Befestigen eines eigensicheren Akkus (300), der direkt mit den mehrzähligen Sicherungsschaltungskomponenten (200A-200F) verbunden wird, wobei der eigensichere Akku (300) eine DC-DC-Wandlereinheit (307) und einen Unter-/Überspannungsschutzschalter (305) umfasst;
das Befestigen einer Ladeschaltung (106), die direkt mit dem eigensicheren Akku (300) verbunden wird, wobei die mehrzähligen Sicherungsschaltungskomponenten (200A-200F) mit den mehrzähligen Betriebskomponentenschaltungen an dem eigensicheren Gerät (15) verbunden werden und wobei jede der mehrzähligen Sicherungsschaltungskomponenten (200A-200F) dafür konfiguriert wird auzulösen, wenn der Strom zu ihrer verbundenen Betriebskomponentenschaltung einen vorgegebenen Schwellenwert übersteigt;
das Vorsehen eines USB-Eingangs (102), wobei der USB-Eingang (102) mit der Ladeschaltung (106) verbunden wird, wobei das Einsetzen und das anschließende Entfernen eines USB-Ladegeräts in den bzw. von dem USB-Eingang (102) bewirkt, dass der Unter-/Überspannungsschutzschalter (305) zurückgesetzt wird; und
das Befestigen der PCB an dem Gehäuse:

6. Verfahren nach Anspruch 5, wobei der eigensichere Akku ferner eine Strombegrenzungssicherungsschaltung umfasst.

7. Verfahren nach Anspruch 5, ferner umfassend: das Vorsehen einer konformen Beschichtung auf den mehrzähligen Sicherungsschaltungskomponenten auf der PCB, um einen Funken zu verhindern, wenn sich das eigensichere Mobilgerät an einem explosionsgefährdeten Ort befindet.

8. Verfahren nach Anspruch 5, ferner umfassend: das Vorsehen einer konformen Beschichtung auf den mehrzähligen Betriebskomponentenschaltungen, um einen Funken zu verhindern, wenn sich das eigensichere Mobilgerät an einem explosionsgefährdeten Ort befindet.

## Revendications

1. Dispositif mobile à sécurité intrinsèque (15) comprenant un boîtier, ce dispositif mobile de sécurité intrinsèque (15) comprenant :
- une carte de circuits imprimés PCB (54),
- un ensemble de composants de circuit à fusible (200A-200F) montés sur la PCB (54),
- un ensemble de circuits à composant opérationnel montés sur la PCB (54),
- un bloc de batterie à sécurité intrinsèque (300) qui est connecté directement aux composants du circuit à fusible (200A-200F), le bloc de batterie à sécurité intrinsèque (300) comprenant une unité de convertisseur DC/DC (307) ainsi qu'un disjoncteur de protection anti-sous/surtension (305), et
- un circuit chargeur (106), les composants du circuit à fusible (200A-200F) étant connectés aux circuits à composant opérationnel montés sur le dispositif mobile à sécurité intrinsèque (15), et chacun des composants (200A-200F) du circuit à fusible (200A-200F) étant relié aux circuits à composant opérationnel montés sur le dispositif à sécurité intrinsèque (15), et chacun des composants de circuit à fusible (200A-200F) étant conformé de manière à se déclencher lorsque le courant passant dans le circuit à composant opérationnel connecté à celui-ci dépasse une valeur de seuil prédéfinie,
**caractérisé en ce que**
le dispositif (15) comporte un port USB (102) connecté au circuit chargeur (106), l'insertion et l'extraction consécutive d'une clé USB dans le port USB (102) entraîne la remise à zéro du disjoncteur de protection anti-sur/sous-tension (305).

2. Dispositif mobile à sécurité intrinsèque conforme à la revendication 1,
dans lequel le bloc de batterie à sécurité intrinsèque comporte en outre un circuit à fusible de limitation thermique.

3. Dispositif mobile à sécurité intrinsèque conforme à la revendication 1, comprenant en outre un revêtement enrobant sur les composants du circuit à fusible monté sur la PCB pour empêcher une étincelle lorsque le dispositif mobile à sécurité intrinsèque est dans une position instable.

4. Dispositif mobile à sécurité intrinsèque conforme à la revendication 1,
comprenant en outre un revêtement enrobant sur les circuits à composant opérationnel permettant d'empêcher une étincelle lorsque le dispositif mobile à sécurité intrinsèque est dans une position instable.

5. Procédé d'obtention d'un dispositif mobile à sécurité intrinsèque (15) équipé d'un boîtier, ce procédé comprenant des étapes consistant à :
fixer un ensemble de composants de circuit à fusible (200A-200F) sur une PCB (54),
fixer un ensemble de circuits à composant opérationnel sur la PCB (54), fixer un bloc de batterie à sécurité intrinsèque (300) qui est directement connecté aux composants de circuit à fusible (200A-200F), le bloc de batterie à sécurité intrinsèque (300) comprenant une unité de convertisseur DC/DC (307) et un disjoncteur de protection anti-sous/surtension (305),
fixer un circuit chargeur (106) qui est directement connecté au bloc de batterie à sécurité intrinsèque (300), les composants du circuit à fusible (200A-200F) étant connectés aux circuits à composant opérationnel montés sur le dispositif à sécurité intrinsèque (15), et chacun des composants du circuit à fusible (200A-200F) étant conformé pour se déclencher lorsque le courant passant dans le circuit à composant opérationnel connecté à celui-ci dépasse un seuil prédéfini,
se procurer un port USB (102), le port USB (102) étant connecté au circuit chargeur (106), l'insertion et l'extraction consécutive d'une clé USB dans le port USB (102) entraînant la remise à zéro du disjoncteur de protection anti-sous/surtension (305), et
fixer la PCB au boîtier.

6. Procédé conforme à la revendication 5, selon lequel le bloc de batterie à sécurité intrinsèque comporte un circuit à fusible de limitation de courant.

7. Procédé conforme à la revendication 5, comprenant en outre une étape consistant à appliquer un revêtement enrobant sur les composants de circuit à fusible de la PCB pour empêcher une étincelle lorsque le dispositif mobile à sécurité intrinsèque est dans une position instable.

8. Procédé conforme à la revendication 5, comprenant en outre une étape consistant à appliquer un revêtement enrobant sur les circuits à composant opérationnel pour empêcher une étincelle lorsque le dispositif mobile à sécurité intrinsèque est dans une position instable.
